# EUROPEAN PATENT APPLICATION

(11) **EP 1 657 913 A1**
(43) Date of publication of application: **17.05.2006**
(21) Application number: 05251253.0
(22) Date of filing: 02.03.2005
(51) Int. Cl.: H04N 5/225

(54) **Small CCD camera and parameter setting controller**

(30) Priority: 15.11.2004 JP 2004330820
(71) Applicant: Watec Co., Limited, Tsuruoka-shi, Yamagata-ken (JP)
(72) Inventor: Igarashi, Shigehisa, Tsuruoka-shi, Yamagata-ken (JP)
(74) Representative: Haley, Stephen

(57) **Abstract**

In a small CCD camera omitted from an imaging parameter setting function, the small CCD camera and a parameter setting controller for the same are provided, in which the user can simply perform a change to imaging parameters of the small CCD camera.

The small CCD camera having no imaging parameter setting function comprises a parameter setting terminal to which a cable can detachably be connected from the outside, and can perform the write-read of the imaging parameters stored in a non-volatile memory of the interior from an external parameter setting controller through the parameter setting terminal and the cable. The external parameter setting controller comprises a liquid crystal display unit for performing a display of the imaging parameters of the small CCD camera, item selection buttons for performing a changing operation of the imaging parameters, and a menu dial.

## Description

The present invention relates to a small CCD camera and a parameter setting controller used for setting imaging parameters thereof, which are suitable to be built into industrial equipment and the like.

Conventionally, in general, a small CCD camera of this type has been simply designed to be cylindrical, three dimensional, and rectangular for the external shape so that it is suitable for miniaturization, and simply provided with a lens unit at one end portion and a power supply and video output terminal at the other end portion. In use, a cable is connected to the power supply and video output terminal and a video signal is outputted through this cable.

For miniaturization, the function of such a small CCD camera has been limited to the minimum, a setting function of imaging parameters such as an exposure control, a color balance control, a gamma characteristic and the like which are available in an ordinary camera is not provided for the small CCD camera itself, and after being set by a manufacture at the time of shipment from a production line, the imaging parameters are not allowed to be adjusted by the user.

However, the imaging parameters are often required to be changed at the site and other locations depending on an intended use and an application of such a small CCD camera. Since the imaging parameters are not allowed to be adjusted by the user, the user has to return the small CCD camera to the manufacture, and the manufacturer disassembles the small CCD camera, and performs a change to the imaging parameters by using a special tool while using color samples and the like provided by the user, and after that, the small CCD camera is returned to the user for assessment at the user side. This cycle has been repeated several times, thereby causing a problem that this is not effective. Further, there has been a problem that, even when the change to the imaging parameters is required again, such a requirement is not met promptly.

The present invention has been made in view of such problems, and an object of the invention is to provide a small CCD camera and a parameter setting controller for the same capable of simply changing imaging parameters at the user side in the small CCD camera omitted from an imaging parameter setting function.

To achieve the above described object, the small CCD camera according to the invention, having no imaging parameter setting function comprises a parameter setting terminal to which a cable can detachably be connected from the outside, and is capable of receiving a change to imaging parameters to be stored inside from an external parameter setting controller through the parameter setting terminal and the cable.

Since the imaging parameters can be set from an external parameter setting controller through the parameter setting terminal not available heretofore, the setting and changing of the imaging parameters stored within the small CCD camera can be performed at the user side also.

In the meantime, since the small CCD camera itself does not need the parameter setting function, without damaging the miniaturization, an expansion of function can be performed.

Since the setting of the imaging parameters are performed through a cable, the setting operation can be easily performed even for the CCD camera located at a location difficult for a hand to reach.

Further, the parameter setting terminal can be provided separately from a power supply and video output terminal. During taking images, the power supply and the video output are performed through a cable from the power supply and video output terminal, so that the camera can be used similarly as before.

The small CCD camera can further comprise a non-volatile memory storing the imaging parameters, and a write-read unit for writing the imaging parameters inputted through a cable detachably connected to the parameter setting terminal, to the non-volatile memory, and, for reading the imaging parameters stored in the non-volatile memory so as to be outputted through the cable detachably to the parameter setting terminal. The write-read of the imaging parameters of the non-volatile memory are performed by the write-read unit, so that the imaging parameters can be changed from the external parameter setting controller, and moreover, the content of the imaging parameters can be confirmed from the outside.

A parameter setting controller, according to the present invention, for performing a setting and a change of the imaging parameters for the small CCD camera having no imaging parameter setting function, can be connected to the small CCD camera through a cable, and can read and write the imaging parameters stored within the small CCD camera, and comprises a display unit for displaying the imaging parameters of the small CCD camera, and a setting operation unit for performing a changing operation of the imaging parameters of the small CCD camera. Thus, the setting and changing of the imaging parameters can be performed, while observing the display unit of the parameter setting controller.

The parameter setting controller need not perform a power supply to the small CCD camera or reception of a video output from the CCD camera. Since the power supply and the video output can be performed separately from the parameter setting controller, the ordinary imaging can be performed without requiring the parameter setting controller, and the imaging can be performed similarly to the conventional CCD camera.
FIG. 1 is a perspective view of a small CCD camera and a parameter setting controller according to an embodiment of the present invention;
FIG. 2 is a rear view of the small CCD camera of FIG. 1;

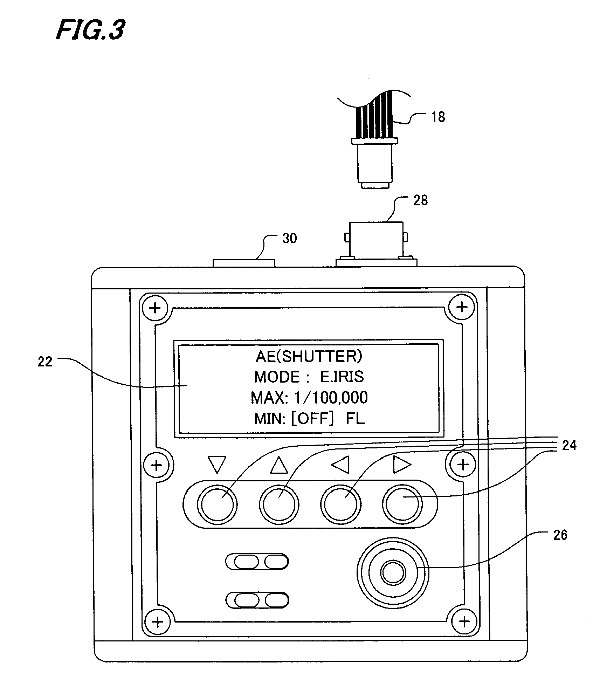

FIG. 3 is a front view of the parameter setting controller of FIG. 1;

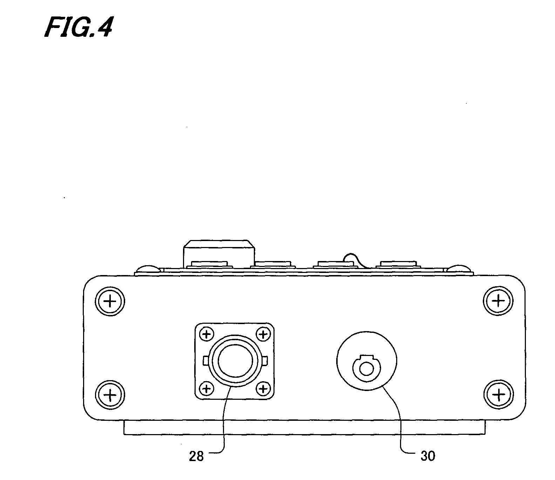

FIG. 4 is a top view of the parameter setting controller of FIG. 1; and
FIG. 5 is a functional block diagram of the small CCD camera of FIG. 1.

An embodiment of the present invention will be described by using the drawings.

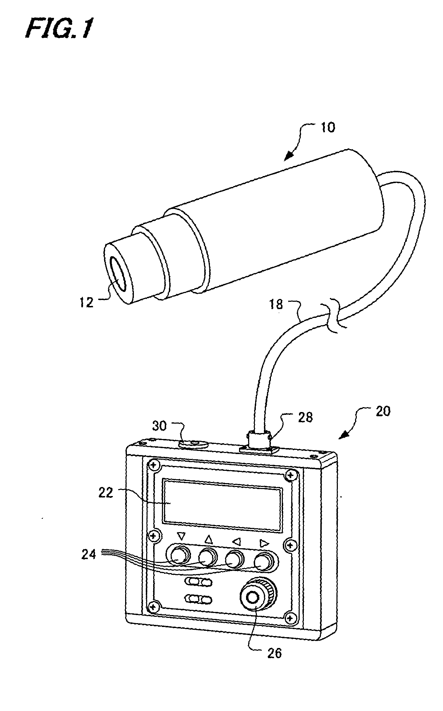

FIG. 1 is a perspective view of an entire small CCD camera of the present invention. As shown, the small CCD camera 10 is simply shaped as a whole, and in an example of the drawing, is cylindrically shaped, however, it is not limited to this shape, but can take any shape. The external dimensions thereof are small, and for example, a cylindrical outer diameter can be made below 20 mm . Such a small CCD camera can be, for example, attached particularly to mobile industrial equipment as a testing camera built into a testing self-propelled robot, a testing camera built into a working robot of a production line, and the like. Further, the camera can be built into a portion difficult to access by a person within industrial equipment or housing. Needless to mention, however, the camera is not limited to these applications.

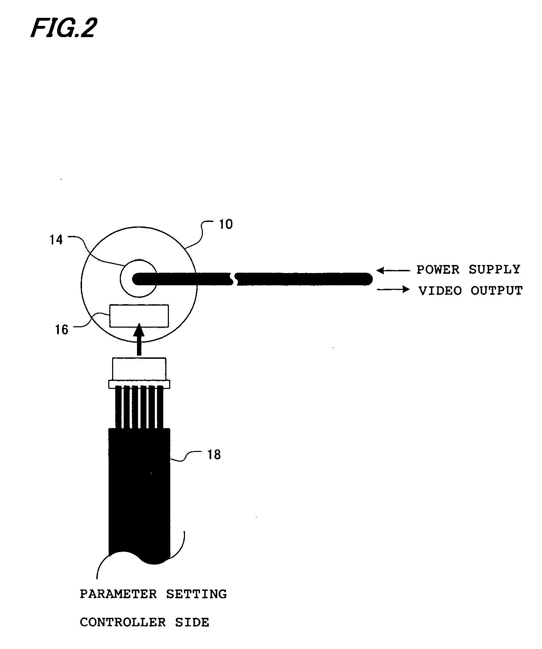

The front end portion of the cylindrical small CCD camera 10 is provided with a lens unit 12, and the cylindrical rear end portion thereof, as shown in FIG. 2, is provided with a power supply and video output terminal 14, and moreover, is provided with a parameter setting terminal 16.

The CCD camera 10 is not provided at all with parameter setting buttons and an electronic display unit for displaying such parameters, and is void of parameter setting functions and miniaturized as much as possible.

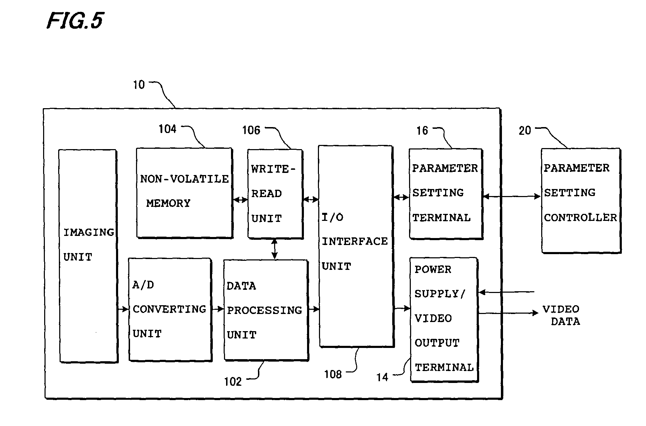

The interior of the CCD camera 10, as shown in FIG. 5, is provided with a data processing unit 102 for software-processing an imaging signal, a non-volatile memory 104, such as an EEPROM, where imaging parameters used at the processing time and the like are stored, a write and read unit 106 for performing write-read of a data to the non-volatile memory 104, and an I/O interface unit 108 for delivering the data between the parameter setting terminal 16 and the write-read unit 106. Alternatively, it is possible to incorporate a function of the write and read unit 106 into the data processing unit 102 or the non-volatile member 104.

The parameter setting terminal 16 can be connected with a detachable cable 18, and a parameter setting controller 20 is connectable to the CCD camera 10 through the cable 18.

The parameter setting controller 20 is also small and portable, and in the front surface thereof, there are a liquid crystal display unit 22, item selection buttons 24, and a menu dial 26. Further, on the upper surface of the controller 20, there are a power supply terminal 30 and a camera connection terminal 28. The item selection buttons 24 and the menu dial 26 constitute the setting operation unit. Further, inside the parameter setting controller 20, a battery unit can be also stored, so that power supply by the battery can be made possible in a location where the commercial power supply cannot be obtained.

Through the operation of the menu dial 26, the selection of the parameters to be set is made possible. As for the parameters which can be set, there are parameters such as an electronic iris setting, a fixed electronic shutter speed, an AGC setting, a fixing gain setting, a photometric data weighting setting, a white balance setting, a contour correction, a gamma setting, a mirror reversing, a chroma on and off, and the like.

The CCD camera 10 and the parameter setting controller 20 constituted as described above are usually separated. When the CCD camera 10 is built into industrial equipment or the housing and the like, after or before it is built-in, in case there arises a need to change the parameters from the initial values set at the time of shipment, the camera connection terminal 28 of the parameter setting controller 20 and the parameter setting terminal 16 of the CCD camera 10 are connected by the cable 18, and while observing the liquid crystal display unit 22 of the parameter setting controller 20, the item selection buttons 24 and the menu dial 26 are operated so as to perform a setting operation. Further, at this time, when the power supply and video output terminal 14 is connected to a video monitor, while confirming the change to the video signal, the setting operation can be performed, but the monitor is not indispensable.

The imaging parameters set as described above are inputted to the CCD camera through the parameter setting terminal 16 and the I/O interface unit 108, and are written in the address corresponding to the non-volatile memory 104 by the write and read unit 106.

Further, the imaging parameters stored in the non-volatile memory 104 of the CCD camera 10 are read by the write and read unit 106, and are outputted to the parameter setting controller 20 through the I/O interface unit 108 and the parameter setting terminal 16, so that the content thereof can be displayed on the liquid crystal display unit 22.

In this way, after the setting and changing operations are completed, the cable 18 is removed from the parameter setting terminal 16 of the CCD camera 10, and another cable is connected to the power supply and video output terminal 14, so that the CCD camera can be used by itself without carrying the parameter setting controller 20, thereby the imaging operation can be made possible.

In this way, according to the present embodiment, since the CCD camera is not provided at all with the imaging parameter setting function such as the parameter setting buttons and the electronic display unit for displaying the parameters, a small external shape can be maintained, whereas in the meantime, since the imaging parameters can be set by connecting the parameter setting controller 20, after the shipment of the camera from the plant, for example, in a sales store or even at the scene, the setting and changing of the parameters are made possible. Further, even after the camera is built into industrial equipment, the parameters can be changed by the connection of the cable 18. For example, in the circumstances where the CCD camera is built into the portion difficult to access by a person within industrial equipment or housing, granting that the CCD camera is provided with a parameter setting function, and the setting buttons and a display screen are provided, it would be not possible to correctly operate the buttons and confirm the setting content, and consequently, there is no other choice left but taking out the CCD camera.

However, in the CCD camera 10 according to the present invention, not provided with such setting buttons and the display screen, the setting and changing of the parameters can be performed in state where the camera remains to be built-in if it is possible to connect the camera to the parameter setting controller 20.

Further, the parameter setting controller 20 is not allowed to have the supply power current or the video output signal passed through, and at the ordinary using time of the CCD camera 10, there is no need to use the parameter setting controller 20, and therefore, the camera can be constituted compact.

Further, by connecting the cables 18 in order by one set of the parameter setting controller 20, the setting of a plurality of CCD cameras can be changed.

While the principles of the invention have been described above in connection with specific embodiments, and particular modifications thereof, it is to be clearly understood that this description is made only by way of example and not as a limitation on the scope of invention.

## Claims

1. A small CCD camera having no imaging parameter setting function, comprising a parameter setting terminal to which a cable can detachably be connected from the outside,
said small CCD camera, being capable of receiving a change to imaging parameters stored inside from an external parameter setting controller through the parameter setting terminal and the cable.

2. The small CCD camera according to claim 1, wherein said parameter setting terminal is provided separately from a power supply and video output terminal.

3. The small CCD camera according to claim 1 or 2, further comprising a non-volatile memory storing the imaging parameters; and
a write-read unit for writing the imaging parameters inputted through a cable detachably connected to the parameter setting terminal, to the non-volatile memory, and, for reading the imaging parameters stored in the non-volatile memory so as to be outputted through the cable detachably connected to the parameter setting terminal.

4. A parameter setting controller for performing a setting and a change of imaging parameters for a small CCD camera having no imaging parameter setting function, which can be connected to the small CCD camera through a cable and can read and write the imaging parameters stored within the small CCD camera, comprising a display unit for displaying the imaging parameters of the small CCD camera, and a setting operation unit for performing a changing operation of the imaging parameters of the small CCD camera.

5. The parameter setting controller according to claim 4, wherein a power supply to said small CCD camera or a reception of a video output from said small CCD camera is not performed.
